# EUROPÄISCHE PATENTSCHRIFT

(11) **EP 0 610 658 B1**
(45) Veröffentlichungstag und Bekanntmachung des Hinweises auf die Patenterteilung: **24.07.1996**
(21) Anmeldenummer: 94100212.3
(22) Anmeldetag: 08.01.1994
(51) Int. Cl.: B23Q 7/14, B65G 65/00, B62B 3/02

(54) **Transportwagen zum Verlagern von Werkstückmagazine- oder -Träger und dergleichen von einer Bearbeitungsmaschine zur nächsten**
Trolley for moving workpiece magazines or carriers or the like from one machine to the next
Chariot de transport pour le transport de magasins ou supports de pièces ou similaire d'une machine d'usinage à suivante

(30) Priorität: 13.01.1993 DE 4300682
(43) Veröffentlichungstag der Anmeldung: 17.08.1994
(73) Patentinhaber: FORD-WERKE AKTIENGESELLSCHAFT, D-50725 Köln (DE); FORD MOTOR COMPANY LIMITED, Brentwood, Essex CM13 3BW (GB); FORD FRANCE SOCIETE ANONYME, F-92506 Rueil Malmaison Cedex (FR)
(72) Erfinder: Tropp, Axel, D-53859 Niederkassel (DE)
(74) Vertreter: Messulam, Alec Moses

(56) Entgegenhaltungen:
- CH-A- 324 945
- DE-A- 2 323 079
- DE-A- 2 509 762
- DE-A- 2 732 251
- DE-B- 2 051 909
- DE-C- 955 575
- DE-U- 8 611 021
- FR-A- 2 116 231

## Beschreibung

Die Erfindung bezieht sich auf einen Transportwagen zum Verlagern von Werkstückmagazinen- oder -trägern und dergleichen von einer Bearbeitungsmaschine zur nächsten, der im Oberbegriff des Patentanspruches 1 erläuterten Art.

Aus der DE-OS 42 07 988 ist ein Transportwagen zum Verlagern von Werkstückmagazinen bekannt, der zumindest eine Aufnahmeebene zur Übernahme und ggf. Verriegeln eines Werkzeugmagazines aufweist und über eine Räderanordnung von einer Bedienungsperson verfahrbar ist.

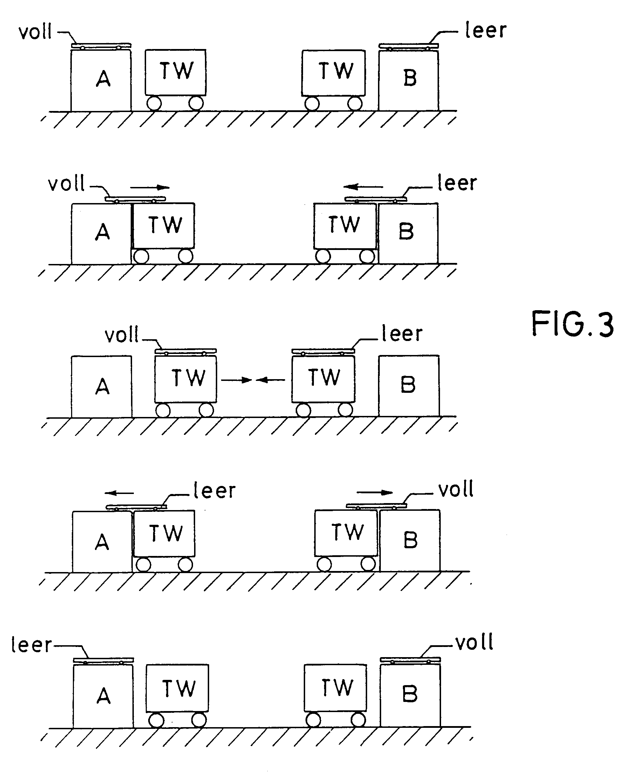

Da an einer Bearbeitungsmaschine normalerweise eine Eingangsstation mit unbearbeiteten Werkstücken und eine Ausgangsstation mit bereits bearbeiteten Werkstücken vorhanden ist, mußten bei dem aus der oben genannten Patentanmeldung bekannten Verfahren zwei Bedienungspersonen mit je einem Transportwagen bereitgestellt werden, um eine entsprechende Verkettung von einer Bearbeitungsmaschine zur nächsten sicherzustellen, da bei Entnahme eines vollen Werkstückmagazines nicht gleichzeitig das erforderliche leere Werkstückmagazin übergeben werden konnte. Bei dem bekannten Verfahren waren neben den erforderlichen Bedienungspersonen auch eine Vielzahl von Leerfahrten notwendig. (Siehe hierzu die Schemaskizze der Fig. 3)

Die Aufgabe der Erfindung ist es, einen Transportwagen zum Verlagern von Werkstückmagazinen- oder -trägern und dergleichen von einer Bearbeitungsmaschine zur nächsten, der im Oberbegriff des Patentanspruches erläuterten Art, derart zu verbessern, daß die erwünschte Verkettung von zwei Bearbeitungsmaschinen nur durch eine Bedienungsperson und unter Wegfall von Leerfahrten bewerkstelligt werden kann.

Aus der FR-A-2 116 231 und der DE-A-2 323 079 sind Transportvorrichtungen mit einer Vielzahl von Aufnahmeebenen für Werkstücke und dergleichen bekannt, die jedoch zur Verlagerung der verschiedenen Aufnahmeebenen in die jeweils erforderliche Übernahmeebene an der Werkzeugmaschine oder an der Lagervorrichtung entweder einer speziellen Hebelvorrichtung oder aber eines herkömmlichen Flurförderfahrzeuges, wie z.B. eines Gabelstaplers bedürfen, die die erforderliche Hubbewegung in die jeweilige Übergabeebene bereitstellen.

Die bekannten Vorrichtungen weisen hierbei den Nachteil auf, daß Flurförderfahrzeuge, wie Gabelstapler, einen erheblichen Manöverierraum benötigen und/oder im Falle einer der Werkzeugmaschine zugeordneten Hebevorrichtung diese Hebevorrichtung an jeder Werkzeugmaschine vorgesehen werden muß.

Aus der DE-A-2 732 251, die als nächstliegender Stand der Technik angesehen wird, insbesondere deren Fig. 6, ist ein Transportwagen zum Verlagern von Werkstücken von einer Bearbeitungsmaschine zur nächsten bekannt, der nur zwei Aufnahmeebenen aufweist, wobei eine zweite Aufnahmeebene unterhalb einer ersten Aufnahmeebene angeordnet ist, wobei jedoch zur Höhenverlagerung der Ebenen wieder eine gesonderte Hubplattform erforderlich ist, die an jeder Bearbeitungsmaschine vorgesehen werden muß.

Eine weitergehendere Aufgabe der Erfindung ist es daher, einen Transportwagen zum Verlagern von Werkstückmagazinen- oder -trägern und dergleichen zu schaffen, der geringen Manöverierraum beansprucht, von Hand und von einer Bedienungsperson bedienbar ist und keine getrennte Hebevorrichtungen an jeder Bearbeitungsmaschine benötigt.

Gemäß der Erfindung wird diese Aufgabe gelöst, indem an einem Transportwagen zum Verlagern von Werkstückmagazinen- oder -trägern und dergleichen von einer Bearbeitungsmaschine zur nächsten, der im Oberbegriff des Patentanspruches 1 erläuterten Art, die im Kennzeichenteil des Patentanspruches 1 aufgezeigten Maßnahmen vorgesehen werden.

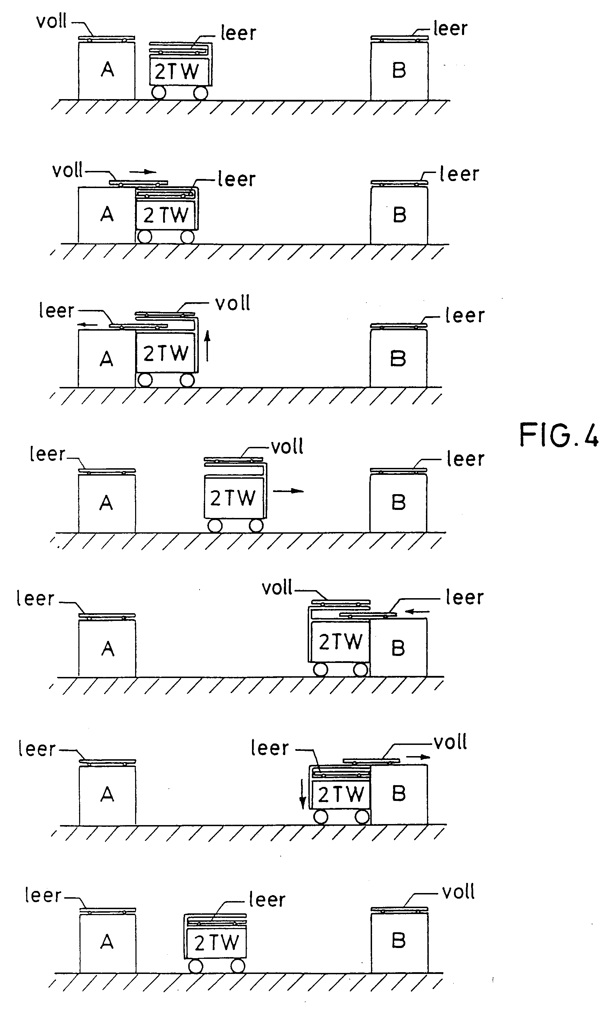

Dadurch, daß zumindest eine zweite Aufnahmeebene vorgesehen ist und die erste und zweite Aufnahmeebene wechselweise über eine Hebeleinrichtung aus einer angehobenen oder abgesenkten Lage in die Übergabeebene verlagerbar angeordnet sind, kann unter Vermeidung von Leerwegen in einem Arbeitszug ein volles Werkstückmagazin von der Bearbeitungsmaschine aufgenommen werden und unmittelbar nachfolgend der Bearbeitungsmaschine ein leeres Werkstückmagazin übergeben werden, damit ohne Unterbrechung eine Ablage der bereits bearbeiteten Werkstücke sichergestellt wird. (Siehe hierzu die Schemaskizze der Fig. 4)

Im Anspruch 2 ist eine weitere Ausführungsmöglichkeit der Erfindung aufgezeigt.

Die Erfindung wird anhand der beiliegenden Zeichnungen näher erläutert. Es zeigt:
- Fig. 1: eine perspektivische Ansicht eines erfindungsgemäßen Transportwagens mit zwei Aufnahmeebenen in seiner Lage bei abgesenkten Aufnahmebenen;
- Fig. 2: eine perspektivische Ansicht des Transportwagens nach Fig. 1 in seiner Lage bei angehobenen Aufnahmeebenen;
- Fig. 3: eine schematische Ablaufskizze einer Verlagerung zwischen zwei Bearbeitungsmaschinen mittels zweier herkömmlicher Transportwagen mit nur einer Aufnahmeebene und den hierfür erforderlichen zwei Mitarbeitern und
- Fig. 4: eine schematische Ablaufskizze einer Verlagerung zwischen zwei Bearbeitungsmaschinen mit dem erfindungsgemäßen Transportwagen mit zwei Aufnahmeebenen und nur einem Mitarbeiter.

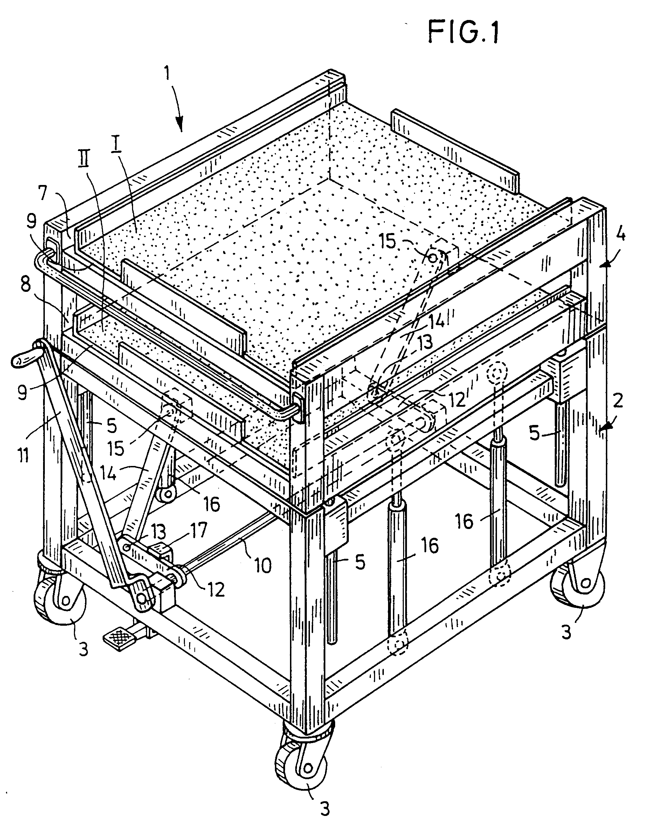

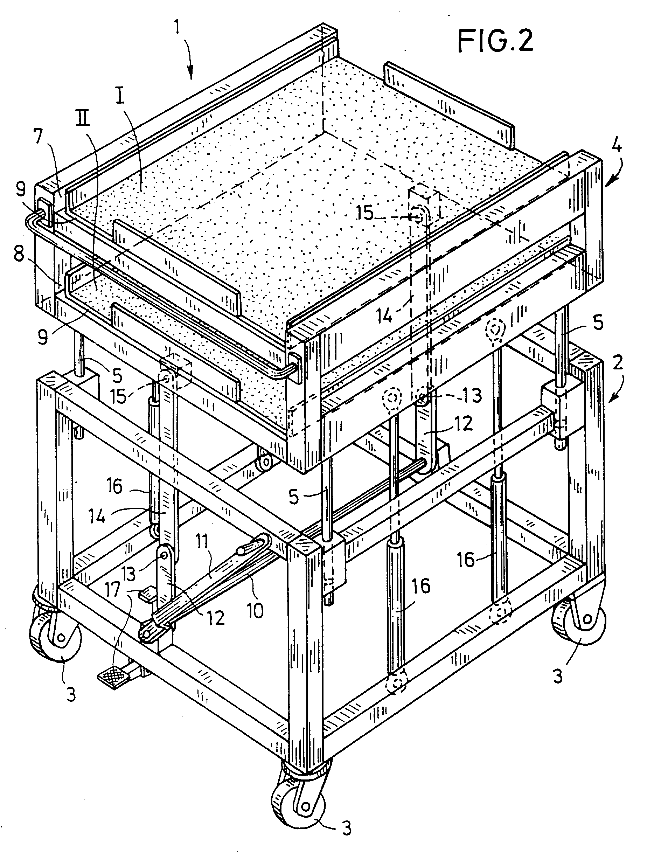

Der in den Fig. 1 und 2 gezeigte erfindungsgemäße Transportwagen 1 besteht im wesentlichen aus einem Wagenunterteil 2, das über eine entsprechende Räderanordnung 3 frei fahrbar ist. Am Wagenunterteil 2 ist ein Wagenoberteil 4 über entsprechende Schiebeführungen 5 nach oben verlagerbar angeordnet.

Im Wagenoberteil 4 sind zwei Aufnahmeebenen I und II in Form von seitlichen Führungsaufnahmen 7 und 8 für die Werkstückmagazine 9 vorgesehen.

In dem in den Fig. 1 und 2 gezeigten Ausführungsbeispiel eines erfindungsgemäßen Transportwagens ist zur Verlagerung des Wagenoberteiles 4 eine mechanische Hebelanordnung vorgesehen, die nachfolgend beschrieben wird.

Am Wagenunterteil 2 ist eine Betätigungswelle 10 über einen Handhebel 11 verschwenkbar gelagert. An der Betätigungswelle 10 sind vorne und hinten zwei Hebelarme 12 drehfest angeordnet, die über Gelenkverbindungen 13 mit je einem Drückhebel 14 verbunden sind, die in zwei Lagerpunkten 15 am Wagenoberteil 4 angelenkt sind.

Wird der Handhebel 11 durch die Bedienungsperson aus seiner in Fig. 1 gezeigten Lage in seine in Fig. 2 gezeichnete Lage bewegt, so wird über die Hebelarme 12 und die Druckhebel 14 das Wagenoberteil 4 nach oben verlagert, wobei diese Verlagerung durch die Schiebeführungen 5, die z.B. parallel zu den vier Ecksäulen des Transportwagens angeordnet sein können, ermöglicht wird.

Zwischen dem Wagenunterteil 2 und dem Wagenoberteil 4 werden zweckmäßigerweise Gewichtsausgleichselemente 16 z.B. in Form von Luftfedern angeordnet, die das Gewicht des Werkstückmagazines 9 mit der Vielzahl von Werkstücken in etwa ausgleichen, damit die Bedienung der Hebelanordnung erleichtert wird. In diesem Fall ist am Wagenunterteil eine entriegelbare Sperre 17 vorgesehen, die den Wagenoberteil 4 bei entlastetem Zustand in seiner unteren Lage festhält.

Aus einem Vergleich der Figuren 3 und 4, von denen die Fig. 3 die bisher erforderliche Verfahrensweise bei der Verkettung zweier Bearbeitungsmaschinen mit einem Transportwagen mit nur einer Aufnahmeebene zeigt und von denen Fig. 4 die Verfahrensweise beim Verketten zweier Bearbeitungsmaschinen mittels des erfindungsgemäßen Transportwagens mit zwei Aufnahmeebenen erläutert, ist dem Fachmann aufgrund der einfachen Bezeichnungen in der schematischen Darstellung die Funktionsweise ersichtlich, ohne daß diese im einzelnen durch eine Beschreibung abgehandelt werden muß.

## Patentansprüche

1. Transportwagen zum Verlagern von Werkstückmagazinen- oder -trägern und dergleichen von einer Bearbeitungsmaschine zur nächsten, der nur zwei Aufnahmeebenen (I) zur Übernahme und ggf. zum Verriegeln eines Werkstückmagazines- oder -trägers und dergleichen aufweist und über eine Räderanordnung (3) von einer Bedienungsperson verfahrbar ist und wobei die zweite Aufnahmeebene (II) unterhalb der ersten Aufnahmeebene (I) angeordnet ist,
**dadurch gekennzeichnet,** daß
- die beiden Aufnahmeebenen (I und II) gemeinsam in einem Wagenoberteil (4) angeordnet sind, der über am Wagenunterteil (2) angeordnete Schiebeführungen (5) und über ein mechanisches Hebelgestänge (10 bis 15) nach oben oder unten verlagerbar ist und
- die erste und zweite Aufnahmeebene (I und II) wechselweise über das Hebelgestänge (10 bis 15) aus einer angehobenen oder abgesenkten Lage in die Übergabeebene verlagerbar sind.

2. Transportwagen nach Anspruch 1,
**dadurch gekennzeichnet,** daß
- der Wagenoberteil (4) über Gewichtsausgleichselemente (16) (z.B. Luftfedern) am Wagenunterteil (2) abgestützt ist und über eine Sperre (17) in seiner unteren Lage verriegelbar ist.

## Claims

1. A trolley for transporting workpiece magazines or carriers and the like from one machine tool to the next, which has only two receiving platforms (I) for accepting and possibly securing a workpiece magazine or carrier and the like and can be moved by an attendant by means of a set of wheels (3), and in which the second receiving platform (II) is located below the first receiving platform (I),
characterised in that
- the two receiving platforms (I and II) are located together in an upper part (4) of the trolley which can be moved upwards or downwards along sliding guides (5) fitted on the lower part (2) of the trolley and by means of a mechanical lever system (10 to 15), and
- the first and second receiving platforms (I and II) are movable alternately by means of the lever system (10 to 15) from a raised or lowered position into the transfer plane.

2. A trolley according to claim 1,
characterised in that
- the upper part (4) of the trolley is supported on the lower part (2) by weight counterbalancing elements (16) (e.g. air springs) and can be locked in its lowered position by means of a catch (17).

## Revendications

1. Chariot de transport pour déplacer des magasins pour pièces à usiner ou des porte-pièces et analogues d'une machine d'usinage à la suivante, qui ne présente que deux plans de support (I) pour recevoir et éventuellement bloquer un magasin pour pièces à usiner ou un porte-pièces et analogues, et qui peut être déplacé par un opérateur par le biais de roulettes (3), sachant que le second plan de support (II) est situé sous le premier plan de support (I), caractérisé en ce que les deux plans de support (I et II) sont tous les deux situés dans une partie supérieure de chariot (4) qui peut être déplacée vers le haut ou vers le bas par le biais de glissières de guidage (5) disposées sur la partie inférieure de chariot (2) et d'un mécanisme à leviers (10 à 15), et en ce que le premier et le second plan de support (I et II) peuvent être déplacés tour à tour d'une position levée ou abaissée dans le plan de transfert par le biais du mécanisme à leviers (10 à 15).

2. Chariot de transport selon la revendication 1, caractérisé en ce que la partie supérieure de chariot (4) prend appui sur la partie inférieure de chariot (2) par l'intermédiaire d'éléments d'équilibrage de poids (16) (par ex. des vérins pneumatiques) et peut être verrouillée dans sa position inférieure par un loquet (17).
